(19) Europäisches Patentamt
European Patent Office
Office européen des brevets

(11) **EP 4 442 471 A1**

(12) **DEMANDE DE BREVET EUROPEEN**

(43) Date de publication:
**09.10.2024 Bulletin 2024/41**

(21) Numéro de dépôt: **24164525.8**

(22) Date de dépôt: **19.03.2024**

(51) Classification Internationale des Brevets (IPC):
**B42D 25/346** (2014.01)    **B42D 25/351** (2014.01)

(52) Classification Coopérative des Brevets (CPC):
**B42D 25/346; B42D 25/351**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **04.04.2023 FR 2303352**

(71) Demandeur: **Idemia**
**92400 Courbevoie (FR)**

(72) Inventeurs:
- **MAZZOLINI, Marie**
  **92400 Courbevoie (FR)**
- **VANDROUX, Coralie**
  **92400 Courbevoie (FR)**
- **BERTHE, Benoît**
  **92400 Courbevoie (FR)**

(74) Mandataire: **Idemia**
**2, place Samuel de Champlain**
**92400 Courbevoie (FR)**

(54) **DOCUMENT SÉCURISÉ ET PROCÉDÉ DE FABRICATION D'UN DOCUMENT SÉCURISÉ**

(57) La présente invention concerne un document sécurisé et un procédé de fabrication d'un document sécurisé. Le document sécurisé comprend :
- une couche (13) métallique ou d'oxyde métallique,
- un réseau lenticulaire (11) comprenant des lentilles convergentes (12) positionnées en regard de la couche métallique ou d'oxyde métallique,
- au moins une couche transparente (14) sur laquelle est disposée la couche (13) métallique ou d'oxyde métallique de sorte à ce que ladite couche métallique ou d'oxyde métallique soit intercalée entre le réseau lenticulaire (11) et la couche transparente (14) ;

dans lequel la couche (13) métallique ou d'oxyde métallique comprend des perforations (Pi) formées par focalisation d'une pluralité de rayonnements laser (Fi) au travers du réseau lenticulaire (11) sur la couche (13) métallique ou d'oxyde métallique, la pluralité de rayonnements laser (Fi) étant dirigée selon une pluralité n d'angles d'incidence ($\theta i$) afin de former lesdites perforations (Pi) de sorte à révéler n images personnalisées lorsque le document sécurisé (10, 10') est observé selon les n angles d'incidence
lesdites perforations (Pi) étant réalisées dans des zones de perforations contiguës ou se chevauchant de manière à former une continuité visuelle entre les n images personnalisées lors d'une inclinaison dudit document (10, 10').

[Fig. 4a]

Vue en coupe

EP 4 442 471 A1

## Description

Domaine Technique

L'invention se rapporte à une technique de formation d'images en niveaux de gris ou en couleur, et porte plus particulièrement sur un document comportant un réseau lenticulaire et une couche métallique perforée au laser, une image étant formée à partir de la combinaison de la couche métallique et des perforations au laser.

Technique antérieure

L'invention se rapporte au domaine des documents de sécurité, et en particulier les documents de sécurité sur ou à l'intérieur desquels des images sont observables.

Le marché de l'identité requiert aujourd'hui des documents d'identité (dits aussi documents identitaires) de plus en plus sécurisés. Ces documents doivent être facilement authentifiables et difficiles à contrefaire (si possible infalsifiables). Ce marché concerne des documents très diverses, tels que cartes d'identité, passeports, badges d'accès, permis de conduire etc., qui peuvent se présenter sous différents formats (cartes, livrets...).

Divers types de documents sécurisés comportant des images ont ainsi été développés au cours du temps, notamment pour identifier de manière sécurisée des personnes. Les passeports, cartes d'identité et divers autres documents officiels comportent aujourd'hui généralement des éléments de sécurité qui permettent d'authentifier le document et de limiter les risques de fraudes, falsification ou contrefaçon. Les documents identitaires électroniques comportant une carte à puce, tels que les passeports électroniques par exemple, connaissent ainsi un essor important ces dernières années.

Dans le secteur de l'identité, les microlentilles sont souvent utilisées pour sécuriser les documents et simplifier leur authentification. Grâce au grandissement des lentilles, plusieurs images entrelacées sur une même zone, sont observables une à une ou deux à deux pour un couple d'images stéréoscopiques, selon l'angle de vue adopté. Cette technique peut être utilisée soit pour effectuer des animations multi-images soit des effets en trois dimensions (3D).

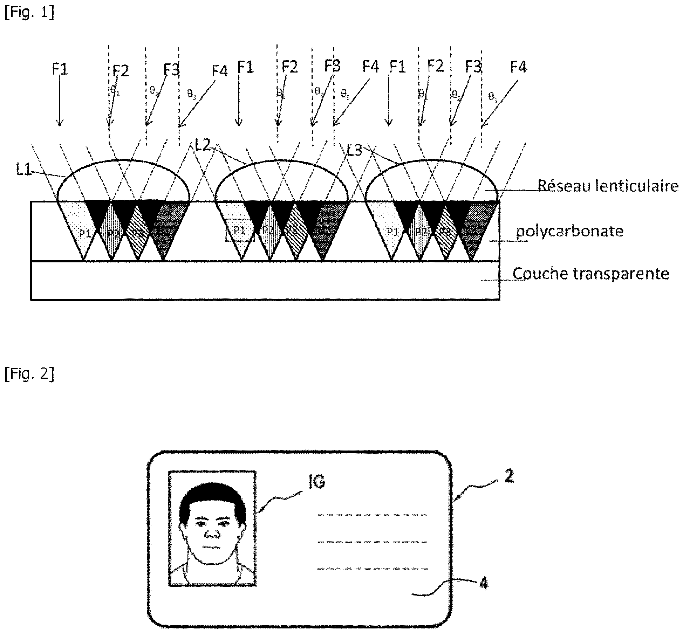

Cependant, en gravant ces images au laser grâce à une structure sensible de quelques dizaines de microns d'épaisseur, tel du polycarbonate, il est nécessaire de tirer au laser à des angles assez éloignés pour minimiser le chevauchement des zones gravées dans l'épaisseur et fournir une bonne séparation des images. Ceci limite la quantité d'images que l'on peut entrelacer. Alors même que pour avoir une finesse d'animation correcte i.e. une bonne fluidité de mouvement, un plus grand nombre d'images serait souhaitable. L'état actuel de la technologie contraint donc d'accepter un compromis sur la qualité compte tenu de la quantité trop limitée d'images gravables sous la lentille. La figure 1 illustre l'utilisation du polycarbonate dans des techniques de l'art antérieur. A cet effet, la figure 1 représente une coupe d'un document sécurisé comprenant au moins trois couches. Une première couche transparente dont l'utilité est principalement de venir rigidifier le document de sécurité. Une seconde couche semblable ou différente, par exemple en épaisseur, non représentée, peut être positionnée au-dessus d'un réseau lenticulaire comprenant une pluralité de lentilles L1, L2, L3...convergentes cylindriques s'étendant parallèlement à une couche de polycarbonate, suivant une direction DR1. Le document comprend également une couche en polycarbonate.

Il est difficile aujourd'hui d'obtenir des couches de polycarbonates d'épaisseur inférieure à quelques dizaines de micromètres. De plus afin de rendre le polycarbonate sensible au laser, il est souvent nécessaire de lui ajouter des additifs, qui viennent accentuer la difficulté pour rendre cette couche très fine. Le document d'identité est exposé à des faisceaux lasers, par exemple 4 faisceaux laser F1, F2, F3 et F4. Ces faisceaux laser sont respectivement orthogonaux vis-à-vis de la direction DR1, inclinés d'un angle $\theta_1$, $\theta_2$, $\theta_3$. La distribution de l'énergie d'un laser s'apparente à une fonction gaussienne. Ainsi, pour un angle donné, le laser va atteindre des hautes énergies nécessaires à la carbonisation du polycarbonate, au niveau du point focal mais également en amont et en aval de ce point, selon l'épaisseur de la zone réactive au laser et de la puissance de celui-ci.

On constate alors que l'exposition d'un document d'identité aux faisceaux F1, F2, F3 et F4 provoque un chevauchement des zones gravées, illustrées par les zones noires sur la figure 1. Ce phénomène est bien entendu inhérent au faisceau laser comme mentionné ci-dessus, mais surtout à l'épaisseur de la couche de polycarbonate qui, même réduite à quelques micromètres, provoque ce phénomène de largeur d'impact. Ainsi le faisceau laser F1 venant graver une pluralité de points formant une image, les points formés par ce laser dans la couche de polycarbonate viennent chevaucher les points formés par les lasers F2, F3 et F4 correspondant à des images différentes, et vice-versa. Il y a donc un chevauchement de zones des images détériorant la qualité visuelle des images ou limitant le nombre d'images gravées permettant un rendu correct pour l'œil. Plus le nombre d'images est réduit, moins le mouvement généré par la pluralité d'images visualisées sous un angle différent est fluide. Il a été proposé de remplacer la couche de polycarbonate par une couche métallique de manière à réduire ce chevauchement entre images. Cependant, les procédés existants ne permettent pas une continuité visuelle de qualité lorsque l'on incline le document car les perforations effectuées sont espacées pour éviter les problèmes de délamination qui surviennent lorsque les perforations ne sont pas suffisamment espacées.

Un besoin consiste donc à pallier les problèmes et déficiences indiqués ci-dessus. La présente invention vise notamment à permettre la formation d'images personnalisées qui sont à la fois sécurisées et de bonne qualité, tout en évitant le problème de chevauchement d'images exposé ci-dessus et permettant une bonne continuité visuelle entre les images lors de l'inclinaison de la carte.

Exposé de l'invention

A cet effet, la présente invention concerne un document sécurisé comprenant :

- une couche métallique ou d'oxyde métallique,
- un réseau lenticulaire comprenant des lentilles convergentes positionnées en regard de la couche métallique ou d'oxyde métallique,
- au moins une couche transparente sur laquelle est disposée la couche métallique ou d'oxyde métallique de sorte à ce que ladite couche métallique ou d'oxyde métallique soit intercalée entre le réseau lenticulaire et la couche transparente ;

dans lequel la couche métallique ou d'oxyde métallique comprend des perforations formées par focalisation d'une pluralité de rayonnements laser au travers du réseau lenticulaire sur la couche métallique ou d'oxyde métallique, la pluralité de rayonnements laser étant dirigée selon une pluralité n d'angles d'incidence afin de former lesdites perforations de sorte à révéler n images personnalisées lorsque le document sécurisé est observé selon les n angles d'incidence lesdites perforations étant réalisées dans des zones de perforations contiguës ou se chevauchant de manière à former une continuité visuelle entre les n images personnalisées lors d'une inclinaison dudit document.

La présence des zones de perforations contiguës permet avantageusement d'obtenir une densité d'images qui permet d'obtenir une continuité visuelle, c'est-à-dire un défilement d'images donnant l'impression d'un mouvement fluide, lorsque l'on incline la carte ainsi que d'obtenir une image animée de très bonne qualité. Chaque zone de perforation peut avantageusement comprendre une perforation dont la largeur peut être plus ou moins importante, selon la puissance et l'énergie du faisceau laser injectée pour créer la perforation et l'ensemble des perforations ainsi réalisées vient en collaboration former plusieurs pixels en niveau de gris. Les perforations peuvent en effet divulguer des zones claires lorsque la couche métallique est accolée à une zone transparente ou des zones sombres lorsque la couche métallique est accolée à une zone opaque noire.

Selon certains modes de réalisation, l'épaisseur de la couche métallique est comprise entre 10 et 20 nanomètres.

Avantageusement, il est possible d'obtenir des couches métalliques de très fine épaisseur en comparaison des couches en polycarbonate.

Selon certains modes de réalisation, le document comprend une couche opaque noire sous la couche métallique, ladite couche noire n'étant pas perforée par ladite pluralité de rayonnements laser.

Ceci peut permettre de découvrir des zones sombres sous les perforations. Selon l'éclairage, épiscopique ou diascopique, on peut alors venir modifier le rendu visuel de l'image.

Selon certains modes de réalisation, les perforations révèlent des zones noires lorsque la couche métallique est exposée à une lumière incidente à travers ledit réseau lenticulaire.

Selon certains modes de réalisation, les perforations révèlent des zones blanches lorsque la couche métallique est exposée à une lumière incidente à travers la couche transparente.

Ceci est rendu possible lorsque la couche métallique est adossée à une couche transparente.

Selon certains modes de réalisation, ladite couche métallique ou d'oxyde métallique comprend une ou plusieurs zones comprenant une ou plusieurs secondes perforations métalliques pour permettre l'adhésion entre ladite couche métallique et la au moins une couche transparente.

Selon certains modes de réalisation,

- lesdites lentilles sont sphériques, et
- l'angle maximal d'incidence desdits faisceaux laser entre le centre d'une desdites lentilles et le rayon de la lentille est compris dans une plage allant de 14 degrés à 20 degrés,
- le nombre de zones de perforations sous chaque lentille étant compris entre 5 et 7.

Selon certains modes de réalisation, la distance d entre les centres de deux zones de perforation contiguës est donné par la formule suivante

$$d = \left( \sqrt{\lambda^2 + 1} \right) * y$$

dans laquelle le pas x de déplacement du laser dans une direction est égal à λ fois le pas y dans l'autre direction.

L'invention concerne également un procédé de fabrication d'un document sécurisé comprenant

- la formation d'une couche métallique sur une couche support
- le positionnement d'une couche lenticulaire comprenant des lentilles convergentes, en regard de la couche métallique, la couche métallique étant intercalée entre le réseau lenticulaire et la couche support ; et
- la formation de perforations par focalisation d'une pluralité de rayonnements laser au travers du réseau lenticulaire sur la couche métallique, la pluralité de rayonnements laser étant dirigée selon une pluralité n d'angles d'incidence afin de former lesdites perforations de sorte à révéler n images personnalisées lorsque le document sécurisé est observé selon les n angles d'incidence,

lesdites perforations étant réalisées dans des zones de perforations contiguës ou se chevauchant de manière à former une continuité visuelle entre les n images personnalisées lors d'une inclinaison dudit document.

Selon certains modes de réalisation, le procédé comprend, préalablement à la formation de perforations et à un assemblage par lamination desdites couches,- la destruction partielle, par un rayonnement laser ou par insolation, de la couche métallique de sorte à retirer sélectivement au moins des portions de la sous-couche métallique pour former des zones démétallisées dans la couche métallique.

Selon certains modes de réalisation, ladite pluralité de rayonnements laser parcourt ladite couche métallique selon une première direction et selon une seconde direction perpendiculaire à la première, le pas x de déplacement du laser dans une direction étant égal à λ fois le pas y dans l'autre direction, le diamètre d minimal d'une perforation permettant d'obtenir une ablation de la largeur du pas est déterminé par

$$ d = \left( \sqrt{\lambda^2 + 1} \right) * y $$

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

[Fig. 1] La figure 1 représente l'utilisation d'une couche de polycarbonate telle que connue dans l'art antérieur ;

[Fig. 2] La figure 2 représente schématiquement un document sécurisé selon un mode de réalisation particulier de l'invention ;

[Fig. 3a] La figure 3a représente une vue en coupe représentant schématiquement une structure multicouche selon un mode de réalisation particulier de l'invention,

[Fig. 3b] La figure 3b représente une vue en coupe représentant schématiquement une structure multicouche selon un mode de réalisation particulier de l'invention,

[Fig. 4a] La figure 4a représente une vue en coupe représentant schématiquement une structure multicouche selon un mode de réalisation particulier de l'invention,

[Fig. 4b] La figure 4b représente une vue de dessus représentant schématiquement une structure multicouche selon un mode de réalisation particulier de l'invention,

[Fig. 5a] La figure 5a représente une vue en coupe représentant schématiquement une structure multicouche selon un mode de réalisation particulier de l'invention,

[Fig. 5b] La figure 5b représente une vue de dessus représentant schématiquement une structure multicouche selon un mode de réalisation particulier de l'invention,

[Fig. 6] La figure 6 représente une vue de dessus de quatre perforations illustrant un exemple de relation entre le diamètre d'une perforation et le pas de balayage du rayonnement laser,

[Fig. 7] La figure 7 représente une vue en perspective représentant schématiquement une structure multicouche selon un mode de réalisation particulier de l'invention,

[Fig. 8] La figure 8 représente une vue en perspective représentant schématiquement une structure multicouche selon un mode de réalisation particulier de l'invention,

[Fig. 9] La figure 9 représente une vue en coupe représentant schématiquement une structure multicouche selon un mode de réalisation particulier de l'invention lorsque la structure est éclairée selon un éclairage diascopique,

[Fig. 10] La figure 10 représente une vue en coupe représentant schématiquement une structure multicouche selon un mode de réalisation particulier de l'invention lorsque la structure est éclairée selon un éclairage épiscopique,

[Fig. 11] La figure 11 représente un procédé selon un mode de réalisation particulier de l'invention,

[Fig. 12] La figure 12 représente un exemple de représentation d'un visage en vision stéréoscopique.

Description des modes de réalisation

Comme indiqué précédemment, l'invention porte de manière générale sur la formation d'une pluralité d'images (en couleurs ou en niveaux de gris) et concerne en particulier un document sécurisé comprenant une pluralité d'images entrelacées.

Dans le présent exposé, la notion de niveaux de gris se réfère à des nuances de gris qui sont générées afin de personnaliser une image en niveaux de gris. Le niveau de gris d'une zone d'une image définit une valeur entre le blanc et le noir. De manière générale, l'invention peut s'appliquer aussi bien pour former une image en niveaux de gris que pour former une image en couleurs. Dans le présent exposé, les notions de « niveaux de gris » et de « couleurs » peuvent se substituer indifféremment l'une à l'autre, selon que l'on souhaite former une image en niveau de gris ou en couleurs. Le concept de l'invention peut ainsi être appliqué pour former aussi bien des images en couleur que des images en niveaux de gris.

L'invention se propose de former une pluralité d'images personnalisées de façon sécurisée à partir d'une couche métallique et d'un réseau lenticulaire positionné en regard de la couche métallique. La couche métallique comprend un arrangement de nanostructures diffractives permettant de diffracter la lumière (au moins) dans le domaine du visible. La couche métallique comprend en outre des perforations (ou trous) formées par focalisation d'un rayonnement laser au travers du réseau lenticulaire sur la couche métallique. Pour ce faire, le réseau lenticulaire comprend des lentilles convergentes aptes à faire converger le rayonnement laser précité sur la couche métallique.

Ces perforations permettent de révéler des images personnalisées - en couleurs ou en niveau de gris - lorsque le document est observé suivant un ou des angles d'observation appropriés. Ainsi, en observant le document selon un angle d'incidence du rayonnement layer utilisé pour former des perforations dans la couche métallique, on peut visualiser une image révélée par lesdites perforations dans la couche métallique.

Comme expliqué ci-après, il est ainsi possible de former des images personnalisées, en couleur ou en niveaux de gris, de bonne qualité (en particulier avec un bon contraste), facile à authentifier, robuste vis-à-vis des risques de fraudes, falsification ou contrefaçon, en permettant d'augmenter considérablement le nombre d'images par rapport aux solutions de l'art antérieur. Ceci permet un rendu de meilleure qualité permettant une réelle animation entre les images obtenues ou un rendu en trois dimensions de qualité.

L'invention concerne également un procédé de formation d'une telle image personnalisée.

D'autres aspects et avantages de la présente invention ressortiront des exemples de réalisation décrits ci-dessous en référence aux dessins mentionnés ci-avant.

Dans la suite de cet exposé, des exemples de mises en oeuvre de l'invention sont décrits dans le cas d'un document comportant au moins deux images personnalisées selon le principe de l'invention. Ce document peut être un quelconque document, dit document sécurisé, de type livret, carte ou autre. L'invention trouve des applications particulières dans la formation d'images d'identité dans des documents identitaires tels que : cartes d'identité, cartes de crédit, passeports, permis de conduire, badges d'entrée sécurisés etc. L'invention s'applique également aux documents de sécurité (billets de banque, documents notariés, certificats officiels...) comportant au moins une image personnalisée. D'autres implémentations sont toutefois possibles.

De même, les exemples de réalisation décrits ci-après visent à former une image d'identité. On comprend toutefois que l'image personnalisée formée selon le concept de l'invention peut être quelconque (forme, nature, couleurs, etc.). Il peut s'agir par exemple d'une image représentant le portrait du titulaire du document concerné, d'autres implémentations étant toutefois possibles.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Comme déjà indiqué, le document au sens de l'invention peut être quelconque. La **figure 2** représente, selon un mode de réalisation particulier, un document sécurisé 2 comportant un corps de document 4 dans ou sur lequel est formée une pluralité d'images sécurisées IG selon le concept de l'invention. L'image IG est en fait une pluralité d'images selon l'angle d'observation du document sécurisé 2.

On suppose, dans les exemples de réalisation qui suivent, que le document sécurisé 2 est un document identitaire, se présentant par exemple sous la forme d'une carte, telle qu'une carte d'identité, badge d'identification ou autre. Dans ces exemples, les images IG sont des images en niveaux de gris, dont le motif correspond au portait du titulaire du document. Comme déjà indiqué, d'autres exemples sont toutefois possibles. Selon la présente divulgation, plusieurs images IG sont réalisées, celles-ci sont visualisables en faisant varier l'angle d'observation vis-à-vis du document sécurisé 2. Ceci permet un rendu animé ou une visualisation en trois dimensions.

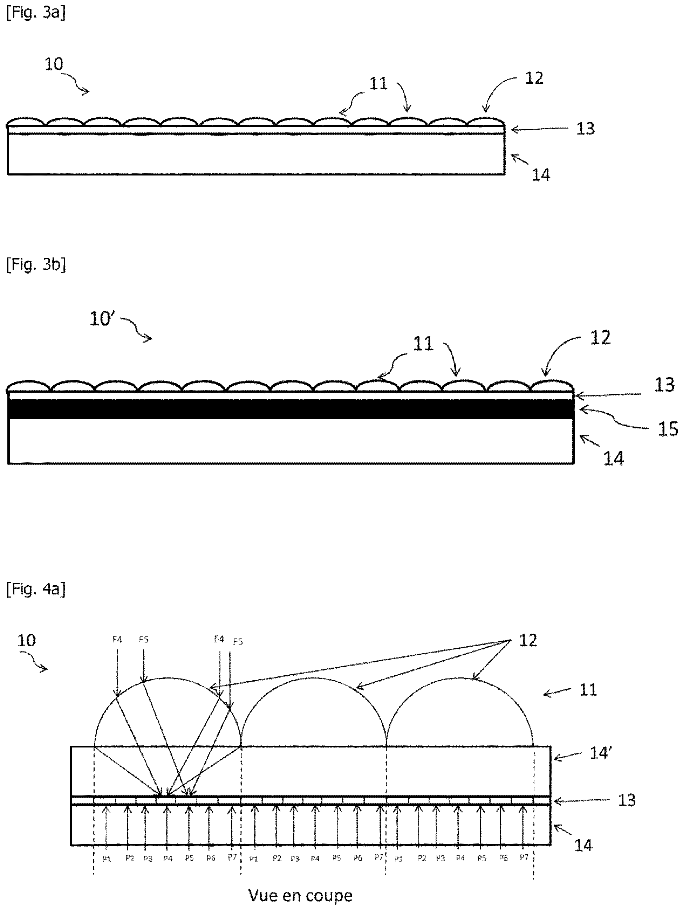

La **figure 3a** représente un premier mode de réalisation d'une structure multicouche 10 dans un état initial (vierge), à partir de laquelle peut être formée une pluralité d'images personnalisées telle que représentée en **figure 2.** Comme expliqué par la suite en référence à la **figure 4a,** cette structure 10 peut être personnalisée afin de former des images personnalisées. Cette structure 10 constitue par exemple le document 2 représenté en **figure 2** ou peut être comprise dans le document 2 afin de former les images IG.

Comme illustré en **figure 3a,** la structure multicouche 10 comprend un réseau lenticulaire 12 positionné en regard (au-dessus) d'une couche métallique 13. La couche métallique 13 est elle-même disposée sur une couche support (ou substrat) 14 de sorte à ce que cette couche métallique 13 soit intercalée entre le réseau lenticulaire 12 et la couche support 14. La couche support 14 est de préférence une couche transparente. Une autre couche transparente 14' (non représentée) peut être positionnée au-dessus du réseau lenticulaire 12 ou entre le réseau lenticulaire et la couche métallique.

La couche métallique 13 peut comprendre au moins l'un parmi les matériaux suivants : aluminium, argent, cuivre, sulfure de zinc, oxyde de Titane...Cette couche métallique peut également être préférentiellement un oxyde métallique.

Le réseau lenticulaire 12 comprend des lentilles (ou microlentilles) convergentes 11 positionnées en regard (au-dessus) de la couche métallique 13. Divers arrangements et configurations de lentilles 11 peuvent être envisagés comme décrit ci-après. Ces lentilles permettent notamment de focaliser un rayonnement laser sur la couche métallique 13 afin de former des images IG selon le principe de l'invention. Selon ce mode de réalisation, le réseau lenticulaire comprend une pluralité de lentilles 11 convergentes cylindriques s'étendant parallèlement à la couche métallique.

Comme déjà indiqué, la couche métallique 13 représentée en **figure 3a** est vierge dans le sens où elle ne comporte pas l'information définissant le motif des images finales IG que l'on souhaite former. Dans son état initial, la structure multicouche 10 ne forme aucune image personnalisée IG. Pour former des images personnalisées IG, des perforations sont formées par rayonnement laser dans la couche métallique 13 comme décrit ci-dessous.

La **figure 3b** représente un second mode de réalisation d'une structure multicouche 10 dans un état initial (vierge), à partir de laquelle peut être formée une pluralité d'images personnalisées telle que représentée en **figure 2.** Comme expliqué par la suite en référence à la **figure 4a,** cette structure 10 peut être personnalisé afin de former des images personnalisées. Cette structure 10 constitue par exemple le document 2 représenté en **figure 2** ou peut être comprise dans le document 2 afin de former les images IG.

Comme illustré en **figure 3b,** la structure multicouche 10 comprend un réseau lenticulaire 12 positionné en regard (au-dessus) d'une couche métallique 13. La couche métallique 13 est elle-même disposée sur une couche opaque noire 15. Cette couche opaque noire 15 ne laisse pas passer de lumière.

La couche opaque noire est positionnée au-dessus d'une couche support (ou substrat) 14 de sorte à ce que cette couche métallique 13 soit intercalée entre le réseau lenticulaire 12 et la couche support 14. La couche support 14 est de préférence une couche transparente. Une autre couche transparente 14' (non représentée) peut être positionnée au-dessus du réseau lenticulaire 12 ou entre le réseau lenticulaire et la couche métallique.

Le réseau lenticulaire 12 comprend des lentilles (ou microlentilles) convergentes 11 positionnées en regard (au-dessus) de la couche métallique 13. Divers arrangements et configurations de lentilles 11 peuvent être envisagés comme décrit ci-après. Ces lentilles permettent notamment de focaliser un rayonnement laser sur la couche métallique 13 afin de former des images IG selon le principe de l'invention. Selon ce mode de réalisation, le réseau lenticulaire comprend une pluralité de lentilles 11 convergentes cylindriques s'étendant parallèlement à la couche métallique.

Comme déjà indiqué, la couche métallique 13 représentée en **figure 3b** est vierge dans le sens où elle ne comporte pas l'information définissant le motif des images finales IG que l'on souhaite former. Dans son état initial, la structure multicouche 10 ne forme aucune image personnalisée IG. Pour former des images personnalisées IG, des perforations sont formées par rayonnement laser dans la couche métallique 13 comme décrit ci-dessous.

En référence aux **figures 3a et 3b,** il est important de noter que l'épaisseur de la couche métallique 13 est de l'ordre de quelques nanomètres, et de préférence dans une plage allant de 10 à 40 nm.

Une couche adhésive et/ou de colle (non représentée) peut être utilisée pour assurer une adhésion de la couche métallique 13 sur la couche transparente 14, dans les modes de réalisation des **figures 3a et 3b.**

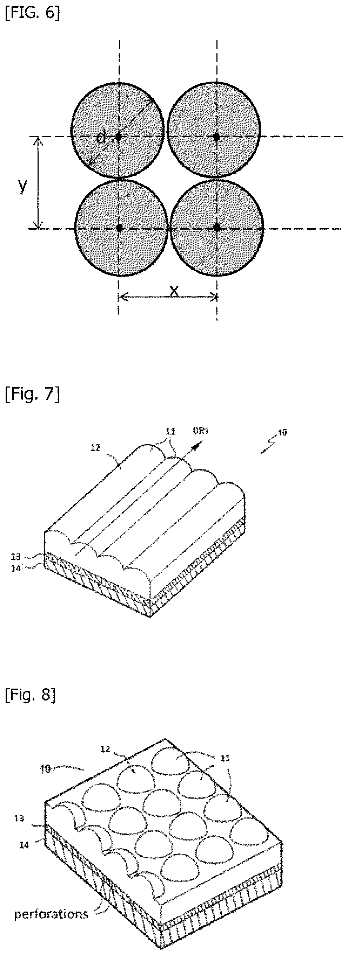

Comme représenté en **figure 4a,** la couche métallique 13 de la structure multicouche 10 comprend des zones de perforations Pi formées par des rayonnements laser Fi (par gravure laser). La figure 4a illustre un mode de réalisation dans lequel les lentilles sont des lentilles cylindriques. Le document 10 comprend en outre sur cet exemple, une couche transparente 14' entre la couche métallique 13 et le réseau lenticulaire 11. Sur la figure 4a, 7 zones de perforations sont présentes sous chaque lentille, dans le sens perpendiculaire à la direction de la lentille cylindrique. Le nombre de 7 lasers est donné à titre purement illustratif et la présente invention s'applique principalement à une multitude de faisceaux laser permettant d'obtenir une grande pluralité d'images.

Pour former ces perforations, le document d'identité est exposé à des faisceaux lasers, par exemple 7 faisceaux laser $F_1$ à $F_7$. Sous un angle donné d'inclinaison du faisceau laser, soit pour chacun des 7 faisceaux laser, on grave une trame par lentille pour chaque faisceau, chaque trame comprenant n pixels, n étant supérieur ou égal à 1. C'est la visualisation de p trames, à travers p lentilles, qui reconstitue pour l'œil de l'observateur, l'image complète qu'il est prévu d'observé sous cet angle d'observation. Les zones de perforation de ces n pixels sont contiguës avec potentiellement une zone de chevauchement. Ces faisceaux laser sont respectivement, vis-à-vis de la direction normale à la direction DR1, parallèles, inclinés d'un angle $\theta_i$. Chacun des faisceaux laser vient former un ensemble de perforations contribuant, pour chaque ensemble, à la formation, avec les zones non perforées, d'une image observable selon la direction du faisceau laser qui les a perforés.

De manière générale, on peut considérer que le document 10 est exposé à i faisceaux $F_i$, i allant de 1 à n dont les directions avec la normale varient de 0 à $\theta n_{-1}$, et permettant d'observer n images lorsque l'on incline la carte avec une continuité visuelle.

Ces perforations traversent l'épaisseur ultra fine de la couche métallique 13 de sorte à révéler (ou découvrir) dans une image personnalisée IG, au travers de la couche métallique 13, des zones de la couche support 14 situées en regard des zones de perforations Pi. La couche 14 étant une couche transparente, les perforations ont pour effet de rendre plus claires les images. On peut ainsi créer des nuances de niveau de gris de sorte à personnaliser une image finale IG.

Comme illustré sur la **figure 4a,** les perforations créées par les faisceaux laser $F_i$ permettent d'obtenir une densité d'images telle que lorsque l'utilisateur de la carte incline la carte, il observe une image animée nette et une animation de bonne qualité, c'est-à-dire avec l'impression d'un mouvement fluide, dont les images ne se chevauchent pas ou peu et évitant ainsi des zones de flou comme illustré en **figure 1.** Ceci est rendu possible d'une part par l'utilisation d'une couche métallique fine perforée selon différents angles d'inclinaison permettant une densité de perforations importantes et d'autre part par la proximité des perforations qui sont contiguës. Les techniques de l'art antérieur n'auraient pas permis d'obtenir une fluidité de l'animation telle que celle obtenue par la présente invention. Effectivement, dans les techniques de l'art antérieur, dans lesquelles la couche de polycarbonate est perforée, il aurait fallu

- soit espacer les faisceaux lasers en augmentant l'angle d'inclinaison entre chaque faisceau laser et de ce fait diminuer énormément la continuité visuelle et donc la qualité de l'animation visuelle obtenue,
- soit, en conservant des angles de déviation proches des faisceaux laser, comme dans la présente invention, avoir une continuité visuelle avec énormément de zones de flou entre les images.

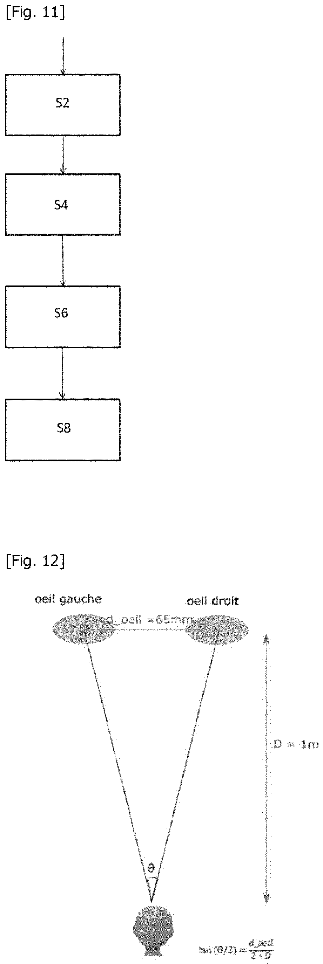

Lorsque l'on observe un couple d'images stéréoscopiques, comme représenté en **figure 12,** on peut déterminer que l'angle préféré entre deux images est déterminé par la formule suivante :

$$[\text{MATH. 2}]\ \tan\frac{\theta}{2} = \frac{d\_oeil}{2*D}$$

Avec d_oeil qui représente une distance moyenne entre les deux yeux d'un être humain, évaluée à 65 mm et D qui représente la distance entre le plan des yeux et les images.

On peut ainsi déterminer, en fonction de la distance à laquelle on regarde le document, quel est l'angle entre deux images qui permet d'obtenir un effet de profondeur satisfaisant pour l'œil humain. Ainsi, si on observe le document de sécurité à une distance de 25 cm, on en déduit que l'angle optimal entre un couple d'images stéréoscopiques est d'environ 15 degrés. Afin d'obtenir une bonne continuité des images, il est important de multiplier les couples d'images stéréoscopiques sous les lentilles.

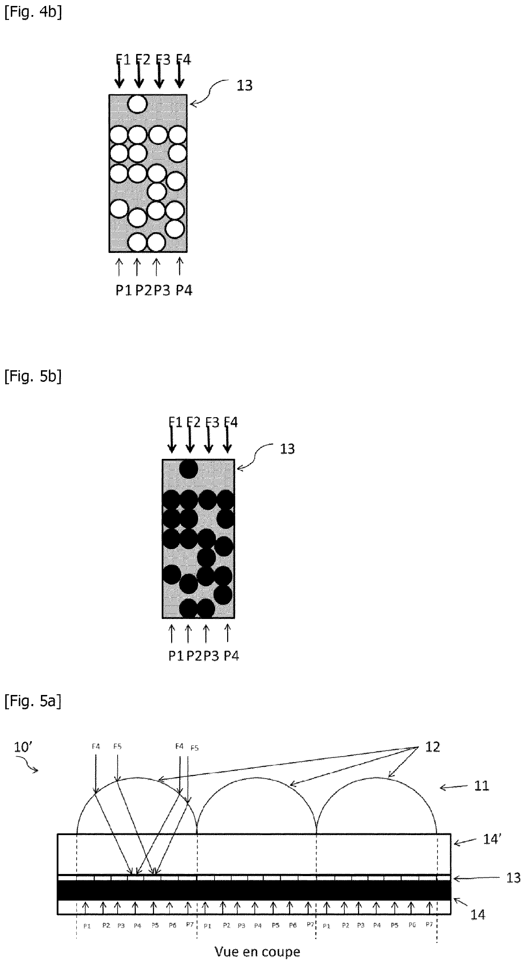

La **figure 4b** illustre une vue de dessus des perforations P1 à P4 créées respectivement par des lasers F1 à F4 tel qu'illustré dans la **figure 4a.** Le nombre de 4 est donné uniquement à titre d'exemple, et pourrait être différent, par exemple 7 comme en figure 4a. La figure 4b représente par exemple une vue de dessus d'une zone située sous une seule lentille cylindrique. On grave ainsi 4 trames distinctes sous une lentille dans cet exemple. Chaque trame comprend une pluralité de pixels, la trame 1 comprend par exemple les pixels des zones de perforation P1. Une zone de perforation ne reçoit qu'un tir laser qui y réalise un trou plus ou moins grand. Une trame étant constituée de 2 pixels ou plus, le laser perfore un premier trou à une certaine énergie et au moins un deuxième trou dans la zone de perforation contiguë avec un deuxième trou, avec potentiellement une autre énergie, et potentiellement un autre diamètre de trou.

Ceci illustre bien que les 4 images formées par les perforations créées par les 4 faisceaux laser ne se chevauchent pas ou peu et permettent une continuité visuelle lorsque l'observateur incline la carte pour visualiser les séquences d'images et obtenir une animation ou un effet 3D. Comme indiqué, les perforations laissent apparaitre des zones blanches, dues à la présence la couche transparente sous la couche métallique. La figure 4b laisse doc apparaître des zones présentant des perforations et des zones ne présentant pas de perforations. Ainsi, on peut voir selon la figure 4b que le document comprend des zones de perforations qui sont contiguës et qui peuvent être perforées par le laser. Le motif des images IG est obtenu en perforant certaines zones de perforation. Les zones de perforation sont représentées par des cercles contigus, la perturbation ou le trou créé par le laser a un diamètre tel que défini en regard de la figure 6.

Comme représenté en **figure 5a,** la couche métallique 13 de la structure multicouche 10' comprend des zones de perforations Pi formées par des rayonnements laser Fi (par gravure laser). La figure 4a illustre un mode de réalisation dans lequel les lentilles sont des lentilles cylindriques. Le document 10' comprend en outre sur cet exemple, une couche transparente 14' entre la couche métallique 13 et le réseau lenticulaire 11. Sur la figure 5a, 7 zones de perforations sont présentes sous chaque lentille, dans le sens perpendiculaire à la direction de la lentille cylindrique. Le nombre de 7 lasers est donné à titre purement illustratif et la présente invention s'applique principalement à une multitude de faisceaux laser permettant d'obtenir une grande pluralité d'images.

Pour former ces perforations, le document d'identité 10' est exposé à des faisceaux lasers, par exemple 7 faisceaux laser $F_1$ à $F_7$. Sous un angle donné d'inclinaison du faisceau laser, soit pour chacun des 7 faisceaux laser, on grave une trame par lentille pour chaque faisceau, chaque trame comprenant n pixels, n étant supérieur ou égal à 1. C'est la visualisation de p trames, à travers p lentilles, qui reconstitue pour l'œil de l'observateur, l'image complète qu'il est prévu d'observé sous cet angle d'observation. Les zones de perforation de ces n pixels sont contigües avec potentiellement une zone de chevauchement. Ces faisceaux laser sont respectivement, vis-à-vis de la direction normale à la direction DR1, parallèles, inclinés d'un angle $\theta_i$. Chacun des faisceaux laser vient former un ensemble de perforations contribuant, pour chaque ensemble, à la formation, avec les zones non perforées, d'une image observable selon la direction du faisceau laser qui les a perforés.

De manière générale, on peut considérer que le document 10' est exposé à i faisceaux $F_i$, i allant de 1 à n dont les directions avec la normale varient de 0 à $\theta n_{-1}$, et permettant d'observer n images lorsque l'on incline la carte avec une continuité visuelle.

Ces perforations traversent l'épaisseur ultra fine de la couche métallique 13 de sorte à révéler (ou découvrir) dans une image personnalisée IG, au travers de la couche métallique 13, des zones de la couche noire 15 situées en regard des perforations. La couche 15 étant une couche opaque noire, les perforations ont pour effet de rendre plus sombres les images. On peut ainsi créer des nuances de niveau de gris de sorte à personnaliser une image finale IG.

La **figure 5b** illustre une vue de dessus de perforations P1 à P4 créées respectivement par des lasers F1 à F4 tel qu'illustré dans la **figure 5a.** Le nombre de 4 est donné uniquement à titre d'exemple, et pourrait être différent, par exemple 7 comme en figure 5a. La figure 4b représente par exemple une vue de dessus d'une zone située sous une seule lentille cylindrique. On grave ainsi 4 trames distinctes sous une lentille dans cet exemple. Chaque trame comprend une pluralité de pixels, la trame 1 comprend par exemple les pixels de la pluralité de zones de perforation P1. Une zone de perforation ne reçoit qu'un tir laser qui y réalise un trou plus ou moins grand. Une trame étant constituée de 2 pixels ou plus, le laser perfore un premier trou à une certaine énergie et au moins un deuxième trou dans la zone de perforation contiguë avec un deuxième trou, avec potentiellement une autre énergie, et potentiellement un autre diamètre de trou.

Ceci illustre bien que les 4 images formées par les perforations créées par les 4 faisceaux laser permettent une continuité visuelle lorsque l'observateur incline la carte pour visualiser les séquences d'images et obtenir une animation ou un effet 3D. Comme indiqué, les perforations laissent apparaitre des zones noires, dues à la présence la couche noire sous la couche métallique .

Ainsi, on peut voir selon les figures 4b et 5b que le document comprend des zones de perforations qui sont contigües et qui peuvent être perforées par le laser. Le motif des images IG est obtenu en perforant certaines zones de perforation. Les zones de perforation sont représentées par des cercles contigus, le laser venant faire des trous ronds dans la couche métallique, l'espacement entre les trous étant défini en regard de la figure 6, en lien avec le pas de déplacement du laser et de l'inclinaison du laser.

Comme illustré sur **les figures 4 et 5,** les perforations créées par les faisceaux laser $F_i$ permettent ainsi d'obtenir une densité d'images telle que lorsque l'utilisateur de la carte incline la carte, il observe une image animée nette dont les images ne se chevauchent pas et évitant ainsi des zones de flou comme illustré en **figure 1.** Ceci est rendu possible d'une part par l'utilisation d'une couche métallique fine perforée selon différents angles d'inclinaison permettant une densité de perforations importantes et d'autre part par la proximité des zones de perforations qui sont contigües. Les techniques de l'art antérieur n'auraient pas permis d'obtenir une fluidité de l'animation telle que celle obtenue par la présente invention. Effectivement, dans les techniques de l'art antérieur, dans lesquelles la couche de polycarbonate est perforée, il aurait fallu

- soit espacer les faisceaux lasers en augmentant l'angle d'inclinaison entre chaque faisceau laser et de ce fait diminuer énormément la continuité visuelle et donc la qualité de l'animation visuelle obtenue,
- soit, en conservant des angles de déviation proches des faisceaux laser, comme dans la présente invention, avoir une continuité visuelle avec énormément de zones de flou entre les images.

Comme illustré sur les figures 4a et 5a, en inclinant le document 10 ou 10' devant l'œil de l'utilisateur, on passe de l'angle de l'image 1 à celui de l'image 7 continuellement. L'utilisateur voit tout d'abord les 2 pixels de l'image 1 puis 1 pixel de l'image 1 et un pixel de l'image 2, puis les deux pixels de l'image 2 et ainsi de suite.

Selon certains modes de réalisation,

- les lentilles (12) sont sphériques, et
- l'angle maximal d'incidence ($\theta i$) des faisceaux laser (Fi) entre le centre d'une des lentilles et le rayon de la lentille est compris dans une plage allant de 14 degrés à 20 degrés,
- le nombre de zones de perforations sous chaque lentille est compris entre 5 et 7

La **figure 6** illustre un mode de réalisation représentant 4 zones de perforations dans la couche métallique et illustrant la relation entre le diamètre d de la zone de perforation et le pas de balayage du faisceau laser, directement lié à l'angle d'inclinaison. Le pas x de balayage dans un sens, ici horizontal est égal à $\lambda$ fois le pas y de balayage dans l'autre sens, perpendiculaire et vertical. De manière à obtenir des perforations contigües, le diamètre d doit être égal à

$$[\text{MATH. 3}] \quad d = \left(\sqrt{\lambda^2 + 1}\right) * y$$

Dans certains modes de réalisation, un chevauchement des zones de perforations peut être toléré et dans ce cas le diamètre d peut être supérieur à cette valeur.

Par ailleurs, les rayonnements laser $F_i$ utilisés pour former les perforations (ou trous) 20 à 23 dans la couche métallique 13 **(figures 4 et 5)** sont de préférence à un spectre de longueurs d'onde différent du spectre de longueurs d'onde du visible. Pour ce faire, on peut par exemple utiliser un laser YAG (par exemple à une longueur d'onde de 1064 nm), un laser bleu, un laser UV, etc. On peut par ailleurs appliquer par exemple une fréquence d'impulsion comprise entre 1 kHz et 500 kHz, bien que d'autres configurations soient envisageables. Il revient à l'homme du métier de choisir la configuration des rayonnements laser $F_i$ selon le cas d'espèce.

La couche métallique 13 est conçue de sorte à ce qu'elle absorbe au moins partiellement l'énergie délivrée par le rayonnement laser $F_i$ pour créer les perforations 20 à 23 précédemment décrites. Autrement dit, le rayonnement laser RY est caractérisé par un spectre de longueurs d'onde qui est absorbé au moins partiellement par la couche métallique 13. On choisit donc les matériaux de la couche métallique 13 en conséquence.

Selon un exemple particulier, les matériaux formant la couche métallique 13 sont sélectionnés de sorte à ce qu'ils n'absorbent pas la lumière dans le visible. De cette manière, il est possible de créer des perforations 20 au moyen d'un rayonnement laser émettant hors du spectre visible et de générer une ou des images personnalisées IG qui sont visibles à l'œil humain par effet diffractif.

Par ailleurs, comme représenté en **figure 7,** les lentilles convergentes L1 à L3 peuvent être des lentilles cylindriques qui s'étendent parallèlement suivant une première direction DR1. A noter toutefois que d'autres implémentations sont possibles. La **figure 8** représente par exemple une variante dans laquelle les lentilles convergentes L1 à L3 sont semi-sphériques, voire asphériques (ce qui permet de compenser les aberrations optiques).

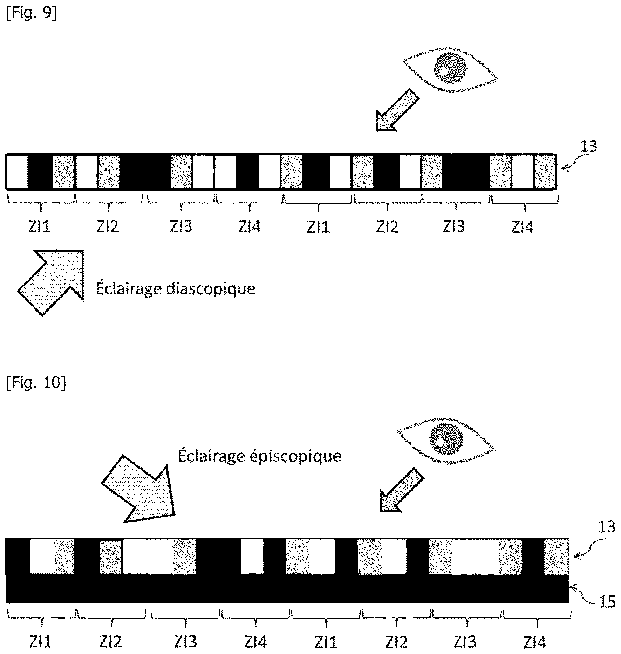

La **figure 9** illustre un exemple de réalisation de perforations dans la couche métallique. Pour des raisons de clarté de représentation, la couche lenticulaire et la couche transparente ne sont pas représentées. Plusieurs zones de perforations ZI1 à ZI4 sont représentées à titre illustratif. La **figure 8** correspond au mode de réalisation des **figures 3a et 4,** c'est-à-dire sans la présence d'une couche opaque noire sous la couche métallique. Le document est éclairé par le dessous. Cette manière d'éclairer est couramment désignée par l'homme du métier comme un éclairage diascopique. Les perforations sont effectuées là où l'on souhaite obtenir un effet de clarté. Les zones perforées permettant le passage de la lumière. Ainsi, les zones blanches sur la couche métallique 13 sont les zones perforées. Lorsque le document 10 est éclairé ainsi, on voit, en l'observant par le dessus, des zones blanches à l'emplacement des perforations.

La **figure 10** illustre un exemple de réalisation de perforations dans la couche métallique. Pour des raisons de clarté de représentation, la couche lenticulaire et la couche transparente ne sont pas représentées. Plusieurs zones de perforations ZI1 à ZI4 sont représentées à titre illustratif. La **figure 9** correspond au mode de réalisation des **figures 3b et 5,** c'est-à-dire avec la présence d'une couche opaque noire sous la couche métallique. Le document est éclairé par le dessus. Cette manière d'éclairer est couramment désignée par l'homme du métier comme un éclairage épiscopique. Les perforations sont effectuées là où l'on souhaite obtenir un effet d'assombrissement. Ainsi, les zones noires sur la couche métallique 13 sont les zones perforées. Lorsque le document 10 est éclairé ainsi, on voit, en l'observant par le dessus, des zones noires à l'emplacement des perforations car les perforations laissent apparaitre les zones noires de la couche noire à l'emplacement des perforations.

Dans les figures 9 et 10, trois pixels sont présents par zone de perforation.

La **figure 11** représente un mode de réalisation d'un procédé selon l'invention pour la fabrication d'une pluralité d'images animées sur un document de sécurité tel que décrit dans les **figures 4a à 5b.**

Au cours d'une étape S2, une couche métallique 13 peut être démétallisée, c'est-à-dire que des zones de métal sont enlevées de cette couche. Cette démétallisation peut préférentiellement être faite par un procédé d'insolation qui vient chauffer les zones métalliques que l'on souhaite extraire. Ces zones représentent une très faible proportion de métal. Cette étape optionnelle peut permettre de limiter un phénomène de délamination qui pourrait survenir lors de l'étape de perforation de la couche métallique lors de la personnalisation. Selon certains modes de réalisation, ce zones peuvent être des bandes de 10 $\mu m$ de large espacées tous les 150 à tous les 200 $\mu m$.

L'absence de métal dans les zones démétallisées de la couche métallique a pour conséquence qu'il n'y a pas de sublimation causée dans ces zones lors de la personnalisation ultérieure de l'arrangement de pixels au laser. Les zones démétallisées forment des zones d'adhésion renforcée qui permettent d'éviter les délaminations ou pertes d'adhésion lors de la personnalisation. Lors de la lamination, le polymère des couches transparentes supérieures et inférieures (si deux couches sont présentes ou d'une seule sinon) migre dans les zones démétallisées de sorte à établir un pont d'adhésion en polymère (de polymère à polymère) entre ces deux couches.

Au cours d'une étape S4 de formation, une couche métallique 13 est formée sur une couche support 14. La couche métallique 13 et la couche support 14 sont telles que déjà décrites dans les modes de réalisation ci-avant. En particulier, la couche métallique 13 peut comprendre au moins l'un parmi les matériaux suivants : aluminium, argent, cuivre, sulfure de zinc, oxyde de Titane...Cette couche métallique peut également être préférentiellement un oxyde métallique.

La couche support 14 peut être opaque vis-à-vis au moins du spectre de longueurs d'onde du visible ou transparente vis-à-vis au moins du spectre de longueurs d'onde du visible, selon l'effet visuel que l'on souhaite créer dans une ou des images IG personnalisées. Comme mentionné dans les exemples précédents, selon un mode de réalisation préféré, la couche 14 est transparente et selon certains modes de réalisation, une couche opaque noire est positionnée au-dessus de la couche métallique avant le dépôt de la couche métallique.

Une couche adhésive et/ou de colle (non représentée) peut être utilisée pour assurer une adhésion de la couche métallique 13 sur la couche support 14 ou le cas échéant sur la couche opaque 15.

Au cours d'une étape S6 de positionnement, un réseau lenticulaire 12 comme déjà décrit dans les modes de réalisation ci-avant est positionné (ou formé) en regard de la couche métallique 13. Dans cet exemple, le réseau lenticulaire 12 est formé directement sur la couche métallique 13 bien que d'autres implémentations soient possibles où au moins une couche intermédiaire est présente entre le réseau lenticulaire 12 et la couche métallique 13.

Comme déjà décrit, le réseau lenticulaire 12 comprend des lentilles 11 convergentes positionnées en regard (au-dessus) de la couche métallique 13, cette dernière étant ainsi intercalée entre le réseau lenticulaire 13 et la couche support 14 ou la couche opaque 15.

Au cours d'une étape S8 de formation, des ensembles de perforations (ou trous) (par exemple les ensembles de perforations 20 à 23) comme déjà décrits dans les modes de réalisation ci-avant sont formés dans la couche métallique 13 par focalisation d'une pluralité de rayonnements laser $F_i$ au travers du réseau lenticulaire 12 sur la couche métallique 13. Ces ensembles de perforations comprennent ainsi une pluralité de perforations réalisées par focalisation d'un rayonnement laser $F_i$ suivant une pluralité d'angles d'incidence $\theta_i$ respectif. Des exemples de valeur d'angles utilisés de manière à obtenir des zones de perforations contiguës ont été donnés en référence aux figures décrites précédemment. Les perforations sont effectuées de sorte à révéler au moins deux images personnalisées entrelacées correspondantes lorsque le document sécurisé 2 (ou la structure 10 ou 10') est observé suivant les angles d'incidence $\theta_i$.

Des groupes de perforations peuvent ainsi être réalisés par focalisation d'un rayonnement laser $F_i$ au travers du réseau lenticulaire 12 suivant des angles d'incidence $\theta$ distincts. Dans ce cas, chaque groupe de perforations représente une image personnalisée IG visualisable par un observateur selon un angle d'observation $\theta_i$ correspondant. Les différentes images IG sont ainsi formées par perforation de façon entrelacée dans la couche métallique 13. Les perforations sont contiguës ou se chevauchent de manière à former une continuité visuelle entre les n images personnalisées lors d'une inclinaison du document.

Comme décrit précédemment les perforations révèlent localement au travers de la couche métallique des zones sombres ou claires, ces zones étant causées (ou produites) par des régions sous-jacentes de la couche support 14 situées en regard des perforations ou de la couche opaque noire située en regard des perforations. Pour ce faire, les perforations sont ici des perforations traversantes qui s'étendent au travers de l'épaisseur de la couche métallique 13) de sorte à révéler des régions sous-jacentes de la couche support 14 transparente ou de la couche 15 opaque.

Une fois l'étape S8 achevée, on obtient ainsi une structure multicouche 10 ou 10' telles que précédemment décrites selon différents modes de réalisation.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

## Revendications

1. Document sécurisé (10, 10') comprenant :

- une couche (13) métallique ou d'oxyde métallique,
- un réseau lenticulaire (11) comprenant des lentilles convergentes (12) positionnées en regard de la couche métallique ou d'oxyde métallique,
- au moins une couche transparente (14) sur laquelle est disposée la couche (13) métallique ou d'oxyde métallique de sorte à ce que ladite couche métallique ou d'oxyde métallique soit intercalée entre le réseau lenticulaire (11) et la couche transparente (14) ;
dans lequel la couche (13) métallique ou d'oxyde métallique comprend des perforations (Pi) formées par focalisation d'une pluralité de rayonnements laser (Fi) au travers du réseau lenticulaire (11) sur la couche (13) métallique ou d'oxyde métallique, la pluralité de rayonnements laser (Fi) étant dirigée selon une pluralité n d'angles d'incidence ($\theta$i) afin de former lesdites perforations (Pi) de sorte à révéler n images personnalisées lorsque le document sécurisé (10, 10') est observé selon les n angles d'incidence
lesdites perforations (Pi) étant réalisées dans des zones de perforations contiguës ou se chevauchant de manière à former une continuité visuelle entre les n images personnalisées lors d'une inclinaison dudit document (10, 10').

**2.** Document selon la revendication 1 dans lequel l'épaisseur de la couche (13) métallique est comprise entre 10 et 20 nanomètres.

**3.** Document selon la revendication 1 ou 2 comprenant une couche (15) opaque noire sous la couche métallique, ladite couche noire n'étant pas perforée par ladite pluralité de rayonnements laser (Fi).

**4.** Document selon la revendication 3 dans lequel les perforations (Pi) révèlent des zones noires lorsque la couche métallique (13) est exposée à une lumière incidente à travers ledit réseau lenticulaire (11).

**5.** Document selon la revendication 1 à 2 dans lequel les perforations révèlent des zones blanches lorsque la couche métallique est exposée à une lumière incidente à travers la couche transparente (14).

**6.** Document selon l'une des revendications précédentes dans lequel ladite couche métallique (13) ou d'oxyde métallique comprend une ou plusieurs zones comprenant une ou plusieurs secondes perforations métalliques pour permettre l'adhésion entre ladite couche métallique et la au moins une couche transparente.

**7.** Document selon l'une des revendications précédentes dans lequel

- lesdites lentilles (12) sont sphériques, et
- l'angle maximal d'incidence ($\theta$i) desdits faisceaux laser (Fi) entre le centre d'une desdites lentilles et le rayon de la lentille est compris dans une plage allant de 14 degrés à 20 degrés,
- le nombre de zones de perforations sous chaque lentille étant compris entre 5 et 7

**8.** Document selon l'une des revendications précédentes tel que la distance d entre les centres de deux zones de perforation contigües est donné par la formule suivante

$$d = \left(\sqrt{\lambda^2 + 1}\right) * y$$

dans laquelle le pas x de déplacement du laser dans une direction est égal à $\lambda$ fois le pas y dans l'autre direction.

**9.** Procédé de fabrication d'un document sécurisé (10, 10') comprenant

- la formation d'une couche métallique (13) sur une couche transparente
- le positionnement d'une couche lenticulaire (11) comprenant des lentilles convergentes (12), en regard de la couche métallique (13), la couche métallique étant intercalée entre le réseau lenticulaire (11) et la couche transparente ; et
- la formation de perforations (Pi) par focalisation d'une pluralité de rayonnements laser (Fi) au travers du réseau lenticulaire (11) sur la couche métallique (13), la pluralité de rayonnements laser (Fi) étant dirigée selon une pluralité n d'angles d'incidence ($\theta$i) afin de former lesdites perforations (Pi) de sorte à révéler n images personnalisées lorsque le document sécurisé (10, 10') est observé selon les n angles ($\theta$i) d'incidence,

lesdites perforations (Pi) étant réalisées dans des zones de perforations contigües ou se chevauchant de manière à former une continuité visuelle entre les n images personnalisées lors d'une inclinaison dudit document.

**10.** Procédé selon la revendication 8 comprenant, préalablement à la formation de perforations et à un assemblage par lamination desdites couches,

- la destruction partielle, par un rayonnement laser ou par insolation, de la couche métallique (13) de sorte à retirer sélectivement au moins des portions de la couche métallique pour former des zones démétallisées dans la couche métallique.

**11.** Procédé selon la revendication 7 ou 8 dans lequel ladite pluralité de rayonnements laser (Fi) parcourt ladite couche métallique (13) selon une première direction et selon une seconde direction perpendiculaire à la première, le pas x de déplacement du laser dans une direction étant égal à $\lambda$ fois le pas y dans l'autre direction, le diamètre d minimal d'une perforation permettant d'obtenir une ablation de la largeur du pas est déterminé par

$$d = \left(\sqrt{\lambda^2 + 1}\right) * y$$

[Fig. 1]

[Fig. 2]

EP 4 442 471 A1

[Fig. 3a]

[Fig. 3b]

[Fig. 4a]

Vue en coupe

[Fig. 4b]

F1 F2 F3 F4

13

P1 P2 P3 P4

[Fig. 5b]

F1 F2 F3 F4

13

P1 P2 P3 P4

[Fig. 5a]

10'

F4 F5    F4 F5

12

11

14'

13

14

P1  P2  P3  P4  P5  P6  P7  P1  P2  P3  P4  P5  P6  P7  P1  P2  P3  P4  P5  P6  P7

Vue en coupe

[FIG. 6]

[Fig. 7]

[Fig. 8]

[Fig. 9]

ZI1    ZI2    ZI3    ZI4    ZI1    ZI2    ZI3    ZI4

Éclairage diascopique

[Fig. 10]

Éclairage épiscopique

ZI1    ZI2    ZI3    ZI4    ZI1    ZI2    ZI3    ZI4

[Fig. 11]

[Fig. 12]

$$\tan(\theta/2) = \frac{d\_oeil}{2*D}$$

**EP 4 442 471 A1**

## RAPPORT DE RECHERCHE EUROPEENNE

Numéro de la demande

**EP 24 16 4525**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/112708 A1 (IDEMIA FRANCE [FR]) 2 juin 2022 (2022-06-02) | 1,9 | INV. B42D25/346 B42D25/351 |
| Y | * page 10, lignes 8-12; revendications 1,26,9 * | 2-6,10 | |
| A | * page 14, lignes 23-25 * | 7,8,11 | |
| | ----- | | |
| Y | WO 2020/010272 A1 (CRANE & CO INC [US]) 9 janvier 2020 (2020-01-09) | 1-6,9,10 | |
| A | * alinéa [0078]; revendications; figures * | 7,8,11 | |
| | ----- | | |
| Y | WO 2012/046213 A1 (ARJOWIGGINS SECURITY [FR]; DIETEMANN PHILIPPE [FR]) 12 avril 2012 (2012-04-12) | 1-6,9,10 | |
| A | * abrégé; revendications; figures * * page 8, ligne 3 - page 21, ligne 14 * | 7,8,11 | |
| | ----- | | |
| A | DE 10 2012 007747 A1 (GIESECKE & DEVRIENT GMBH [DE]) 24 octobre 2013 (2013-10-24) * alinéas [0042] - [0067]; revendications; figures * | 1-11 | |
| | ----- | | DOMAINES TECHNIQUES RECHERCHES (IPC) |
| A | EP 3 608 121 A1 (IAI IND SYSTEMS B V [NL]) 12 février 2020 (2020-02-12) * alinéas [0118] - [0169]; revendications; figures * | 1-11 | B42D |
| | ----- | | |

Le présent rapport a été établi pour toutes les revendications

| Lieu de la recherche | Date d'achèvement de la recherche | Examinateur |
|---|---|---|
| Munich | 25 avril 2024 | Zacchini, Daniela |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

& : membre de la même famille, document correspondant

## ANNEXE AU RAPPORT DE RECHERCHE EUROPEENNE
## RELATIF A LA DEMANDE DE BREVET EUROPEEN NO.

EP 24 16 4525

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-04-2024

| Document brevet cité au rapport de recherche | Date de publication | Membre(s) de la famille de brevet(s) | Date de publication |
|---|---|---|---|
| WO 2022112708 A1 | 02-06-2022 | EP 4251430 A1 | 04-10-2023 |
| | | FR 3116761 A1 | 03-06-2022 |
| | | US 2024017563 A1 | 18-01-2024 |
| | | WO 2022112708 A1 | 02-06-2022 |
| WO 2020010272 A1 | 09-01-2020 | AU 2019297514 A1 | 14-01-2021 |
| | | CA 3103989 A1 | 09-01-2020 |
| | | CN 112334320 A | 05-02-2021 |
| | | EP 3817928 A1 | 12-05-2021 |
| | | JP 2021529688 A | 04-11-2021 |
| | | JP 2023164883 A | 14-11-2023 |
| | | KR 20210029157 A | 15-03-2021 |
| | | US 2020009894 A1 | 09-01-2020 |
| | | WO 2020010272 A1 | 09-01-2020 |
| WO 2012046213 A1 | 12-04-2012 | EP 2625043 A1 | 14-08-2013 |
| | | FR 2965752 A1 | 13-04-2012 |
| | | WO 2012046213 A1 | 12-04-2012 |
| DE 102012007747 A1 | 24-10-2013 | AU 2013248632 A1 | 06-11-2014 |
| | | AU 2017200729 A1 | 23-02-2017 |
| | | CN 104245346 A | 24-12-2014 |
| | | DE 102012007747 A1 | 24-10-2013 |
| | | EP 2838737 A1 | 25-02-2015 |
| | | TW 201344588 A | 01-11-2013 |
| | | WO 2013156149 A1 | 24-10-2013 |
| EP 3608121 A1 | 12-02-2020 | CN 112672889 A | 16-04-2021 |
| | | EP 3608121 A1 | 12-02-2020 |
| | | EP 3634774 A1 | 15-04-2020 |
| | | EP 4000944 A1 | 25-05-2022 |
| | | JP 7189324 B2 | 13-12-2022 |
| | | JP 2021533013 A | 02-12-2021 |
| | | PT 3634774 T | 01-02-2022 |
| | | US 2021309039 A1 | 07-10-2021 |
| | | WO 2020030372 A1 | 13-02-2020 |

Pour tout renseignement concernant cette annexe : voir Journal Officiel de l'Office européen des brevets, No.12/82